# EUROPÄISCHE PATENTSCHRIFT

(11) **EP 3 166 747 B1**
(45) Veröffentlichungstag und Bekanntmachung des Hinweises auf die Patenterteilung: **12.10.2022**
(21) Anmeldenummer: 15729411.7
(22) Anmeldetag: 10.06.2015
(51) Int. Cl.: B23K 26/08, B23K 26/0622, B23K 26/364, B23K 26/082

(54) **VERFAHREN ZUR HERSTELLUNG EINER WERKSTÜCKFLÄCHE AN EINEM STABFÖRMIGEN WERKSTÜCK**
METHOD FOR PRODUCING A WORKPIECE SURFACE ON A BAR-SHAPED WORKPIECE
PROCÉDÉ DE PRODUCTION D'UNE SURFACE SUR UNE PIÈCE EN FORME DE BARRE

(30) Priorität: 09.07.2014 DE 102014109613
(43) Veröffentlichungstag der Anmeldung: 17.05.2017
(73) Patentinhaber: Fritz Studer AG, 3612 Steffisburg (CH)
(72) Erfinder: PLÜSS, Christoph, CH-3400 Burgdorf (CH); FREI, Bruno, CH-3634 Thierachern (CH); DOLD, Claus, CH-8048 Zürich (CH); WARHANEK, Maximilian, CH-8001 Zürich (CH); WALTER, Christian, 07646 Tautendorf (DE)
(74) Vertreter: Rüger Abel Patentanwälte PartGmbB
(86) Internationale Anmeldenummer: PCT/EP2015/062898
(87) Internationale Veröffentlichungsnummer: WO 2016/005133

(56) Entgegenhaltungen:
- EP-A2- 0 191 203
- DE-A1- 19 901 777
- US-A1- 2011 097 162

## Beschreibung

Die Erfindung betrifft ein Verfahren zur Herstellung einer durch eine Nutinnenfläche gebildeten Werkstückfläche unter Verwendung einer Bearbeitungsmaschine mit einem Laser, der Laserstrahlimpulse erzeugt. Die Bearbeitungsmaschine weist außerdem einen Laserkopf auf, der die Laserstrahlimpulse des Lasers auf das Werkstück richtet. Über eine Maschinenantriebseinrichtung mit wenigstens einem Maschinenachsantrieb werden das Werkstück und der Laserkopf in wenigstens einem translatorischen und/oder rotatorischen Freiheitsgrad über den jeweils zugeordneten Maschinenachsantrieb relativ zueinander ausgerichtet und bewegt.

Ein derartiges Bearbeitungsverfahren ist beispielsweise aus DE 10 2010 011 508 A1 bekannt. Dort wird bei der Bearbeitung des Werkstücks ein Rotationswerkzeug hergestellt. Die Laserstrahlimpulse des Lasers werden mit Hilfe einer Ablenkeinrichtung bzw. eines Laserscanners des Laserkopfes auf eine Pulsfläche gerichtet und innerhalb dieser Pulsfläche entlang einer vorgegebenen Pulsbahn auf Auftreffstellen gerichtet. Die Pulsfläche wird durch die Maschinenantriebseinrichtung entlang der Oberfläche des Werkstücks bewegt. Diese Relativbewegung zwischen der Pulsfläche und dem zylindrischen Werkstück erfolgt parallel zur bearbeiteten Oberfläche des Werkstücks, beispielsweise in Axialrichtung, und dabei wird Schicht für Schicht Material abgetragen. Dadurch lässt sich schichtweise die Tiefe des Materialabtrags vergrößern, beispielsweise um eine Nut herzustellen. Die Pulsfläche bewegt sich mehrmals vom Nutanfang zum Nutende und wieder zurück zum Nutanfang, wobei diese Bewegung solange wiederholt wird, bis die Nut fertiggestellt ist.

Aus DE 10 2011 116 974 A1 ist ein Verfahren zur Laserbearbeitung eines Werkstücks bzw. Werkzeugs bekannt, an dem Schneidplatten angebracht sind, die beim Betrieb des Werkzeugs um dessen Längsachse rotierend bewegt werden. Die Schneidplatten sollen mit einer Fase versehen werden. Hierfür wird ein Laserstrahl rechtwinkelig zu der Längsachse ausgerichtet. Das Werkstück wird anschließend durch eine Drehung bewegt, so dass die Schneidplatten auf einer Kreisbahn gedreht werden, zu der der Laserstrahl tangential verläuft. Dabei sollen die mehreren angebrachten Schneidplatten am Werkstück nacheinander sozusagen in den Fokuspunkt des Lasers hineingedreht werden, wodurch aufeinanderfolgend ein Materialabtrag an den Schneidplatten erfolgt. Zu diesem Materialabtrag kann eine Bewegung in Axialrichtung überlagert werden, so dass die Fase entlang der axial verlaufenden Kante der Schneidplatte erzeugt werden kann.

EP 0 870 578 A1 beschreibt ein abrasives Werkzeug und ein Verfahren zu dessen Herstellung. Dieses Werkzeug enthält abrasive Körner, beispielsweise aus Diamant oder anderen abrasiven, harten Materialien. In die flache Außenseite dieser abrasiven Körner 11 werden mit Hilfe eines Lasers Löcher oder Nuten hergestellt, um scharfe Ecken und Kanten zu bilden.

DE 199 01 777 A1 beschreibt ein Verfahren zur Erzeugung einer Nut an einem stabförmigen Werkstück unter Verwendung eines Lasers. Der Laserstrahl wird auf eine Stelle an der Mantelfläche des Werkstücks fokussiert und parallel zur Längsachse des Werkstücks bewegt. Gleichzeitig wird das Werkstück um seine Längsachse gedreht. Mehrere solcher Bearbeitungsdurchgänge sind erforderlich, um die Nut zu bilden.

Das Erzeugen von Werkzeugflächen, beispielsweise Nutinnenflächen, an einem stabförmigen Werkstück mit Hilfe eines gepulsten Lasers ist schwierig. Mit Hilfe der oben beschriebenen Verfahren, bei denen eine Pulsfläche quer zur Abstrahlrichtung der Laserstrahlimpulse über die Werkstückoberfläche bewegt wird, lassen sich hohe Abtragsraten erreichen. Allerding weisen die hergestellten Werkstückflächen, auf die die Laserstrahlimpulse auftreffen, in einigen Fällen keine ausreichend geringe Rauheit auf. Bei anderen bekannten Verfahren ist zwar die Oberflächenqualität zufriedenstellend, es werden allerdings nur kleine Abtragsraten erreicht, so dass sich diese Verfahren nur für das Entfernen von kleinen Materialvolumina eignen.

Es wird deshalb nach Verfahren gesucht, die zum einen das Herstellen einer Werkstückfläche, die durch eine Nutinnenfläche gebildet ist, ermöglichen, die an allen Flächenabschnitten eine sehr geringe Rauheit aufweist, die ohne Nachbearbeitung der beim Materialabtrag hergestellten Werkstückfläche auskommt und außerdem hohe Materialabtragsraten ermöglicht.

Diese Aufgabe wird durch ein Verfahren mit den Merkmalen des Patentanspruches 1 gelöst.

Das erfindungsgemäße Verfahren ist zur Bearbeitung eines stabförmigen Werkstücks eingerichtet. Das unbearbeitete Werkstück hat eine insgesamt zylindrische Form, wobei verschiedene Axialabschnitte unterschiedliche Querschnitte aufweisen können. Das unbearbeitete Werkstück ist insbesondere rotationssymmetrisch zu seiner Längsachse. Erst durch die Bearbeitung gemäß des erfindungsgemäßen Verfahrens, entsteht eine nicht rotationssymmetrische Form. Es kann sich nach der Bearbeitung eine zur Längsachse punktsymmetrische Querschnittsfläche ergeben. Unter zylindrischen Werkstücken sind nicht nur kreiszylindrische Werkstücke, sondern auch andere Zylinderformen zu verstehen, die eine beliebige gekrümmte und/oder eckige Querschnittskontur aufweisen.

Zur Bearbeitung des Werkstücks wird eine Bearbeitungsmaschine mit einem Laser verwendet. Der Laser erzeugt Laserstrahlimpulse, die an einen Laserkopf weitergeleitet werden. Der Laserkopf hat eine Ablenkeinrichtung, beispielsweis einen Laserscanner, und dient dazu, die Laserstrahlimpulse in eine vorgegebene Richtung abzugeben. Eine Steuereinheit steuert den Laserkopf bzw. den Laserscanner derart, dass die Laserstrahlimpulse auf Auftreffstellen innerhalb einer Pulsfläche gerichtet sind. Die Außenkontur sowie die Positionen der Auftreffstellen innerhalb der Pulsfläche werden programmiert oder können von einem Bediener aus einer vorhandenen vorprogrammierten Bibliothek ausgewählt werden. Die Laserstrahlimpulse werden dabei in einer vorgegebenen Sequenz auf die Auftreffstellen innerhalb der Pulsfläche gerichtet. Dabei kann jede Auftreffstelle innerhalb einer Sequenz einmal oder auch mehrmals nacheinander ausgewählt werden. Ist die vorgegebene Sequenz abgeschlossen, beginnt diese Sequenz von neuem oder es wird eine andere vorgegebene Sequenz ausgeführt, beispielsweise wenn sich die Außenkontur der Pulsfläche während der Bearbeitung ändert.

Die Laserstrahlimpulse haben vorzugsweise eine Impulsdauer von kleiner als 12 ps.

Die Bearbeitungsmaschine weist außerdem eine Maschinenantriebseinrichtung mit wenigstens einem Maschinenachsantrieb auf. Jeder Maschinenachsantrieb ist dazu eingerichtet, den Laserkopf und eine Spanneinrichtung für das Werkstück relativ zueinander in einem Freiheitsgrad zu bewegen. Vorzugsweise sind mehrere Maschinenachsantriebe vorhanden, so dass die Relativbewegung zwischen dem Werkstück und dem Laserkopf in mehreren Freiheitsgraden erfolgen kann. Die Freiheitsgrade können translatorisch oder rotatorisch sein. Insgesamt sind somit bis zu sechs Freiheitsgrade möglich, von denen bis zu drei Freiheitsgrade jeweils rotatorisch oder translatorisch sein können.

Während somit der Laserkopf bzw. der Laserscanner jeweils den Laser auf die Auftreffstellen innerhalb der vorgegebenen Pulsfläche richtet, erfolgt gleichzeitig eine Positionierung und/oder Ausrichtung und/oder Bewegung der Spanneinrichtung mit dem Werkstück durch die Maschinenantriebseinrichtung relativ zum Laserkopf bzw. zum Fokusbereich, in dem der Laserkopf die Pulsfläche erzeugt.

Bei dem Verfahren wird das Werkstück in eine Ausgangsposition relativ zum Laserkopf gebracht. Die Ausgangsposition hängt davon ab, was für eine Werkstückfläche am Werkstück hergestellt werden soll. Dabei kann die Längsachse des Werkstücks parallel oder unter einem Neigungswinkel von insbesondere kleiner als 90° gegenüber der Abstrahlrichtung der Laserstrahlimpulse ausgerichtet sein. Als Abstrahlrichtung der Laserstrahlimpulse ist in dieser Anmeldung eine Richtung ausgehend vom Laserkopf parallel zu dessen optischer Achse zu verstehen. Die Laserstrahlimpulse verlaufen im Wesentlichen parallel zu dieser optischen Achse, können jedoch abhängig vom Abstand der Pulsfläche zum Laserkopf und der Größe der Pulsfläche rechtwinklig zur optischen Achse gesehen auch schräg ausgerichtet sein, wobei diese Winkel gegenüber der optischen Achse weniger als 10° und vorzugsweise weniger als 5° betragen.

Vor, während oder unmittelbar nach dem Positionieren des Werkstücks in der Ausgangsposition wird die Pulsfläche für die Bearbeitung vorgegeben oder ausgewählt, wobei sich die Pulsfläche im Laufe der Bearbeitung ändern kann. Zu der Pulsfläche gehört das Vorgeben bzw. Auswählen der Außenkontur sowie der innerhalb der Pulsfläche angeordnete Auftreffstellen und/oder der Sequenz bzw. Reihenfolge, in der ein Laserstrahlimpuls auf die Auftreffstellen gerichtet wird.

Wenn die Pulsfläche für die Bearbeitung vorgegeben oder ausgewählt wurde und sich das Werkstück in der Ausgangsposition befindet, werden die Laserstrahlimpulse über den Laser erzeugt und durch eine entsprechende Steuerung des Laserkopfes in der vorgegebenen Weise auf die Auftreffstellen der Pulsfläche abgegeben. Dabei befindet sich die Pulsfläche an der Stelle des Werkstücks, an der der aktuelle Materialabtrag erfolgen soll. Das Material wird durch Laserablation entfernt.

Dabei ist es entscheidend, dass während des Materialabtrags die Laserstrahlimpulse ausschließlich tangential zu einer durch die Bearbeitung herzustellenden Werkstückfläche ausgerichtet sind. Unter "tangential" ist hier zu verstehen, dass die tatsächliche Ausbreitungsrichtung eines Laserstrahlimpulses maximal um den Divergenzwinkel im Fernfeld und vorzugsweise maximal um den halben Divergenzwinkel im Fernfeld von der Tangente abweicht, die an der aktuellen Materialabtragsstelle an die hergestellte bzw. herzustellende Werkstückfläche angelegt ist. Der Divergenzwinkel ist der Öffnungswinkel des Laserstrahls bzw. Laserstrahlimpulses zwischen der Fokusebene an der Pulsfläche und einer Fokussieroptik des Laserkopfes.

Mit anderen Worten wird die Nutinnenfläche dadurch erzeugt, dass das Material entlang der herzustellenden Werkstückfläche innerhalb der Außenkontur der Pulsfläche entfernt wird. Die Pulsfläche ist an der aktuellen Materialabtragsstelle stets im Wesentlichen rechtwinklig zu der herzustellenden Werkstückfläche bzw. zu dem bereits hergestellten Abschnitt der Werkstückfläche ausgerichtet. Bei fortschreitendem Materialabtrag wird die Pulsfläche über die Maschinenantriebseinrichtung vorzugsweise nicht schräg oder rechtwinklig zur Abstrahlrichtung verschoben. Die Pulsfläche bohrt sich sozusagen in Abstrahlrichtung der Laserstrahlimpulse in das Werkstück hinein.

Die abzutragende Querschnittskontur der Nut ist durch die Außenkontur der Pulsfläche vorgegeben sein. Die abzutragende Querschnittskontur wird dabei vorzugsweise ausschließlich durch die Ablenkeinrichtung des Laserkopfes bestimmt, während die Ausrichtung der Längsachse des Werkstücks und die Bewegung der aktuellen Materialabtragsstelle am Werkstück entgegen der Abstrahlrichtung ausschließlich durch die Maschinenantriebseinrichtung erfolgt.

Die Maschinenantriebseinrichtung erzeugt eine Relativbewegung des Werkstücks gegenüber dem Laserkopf in einem oder mehreren translatorischen bzw. rotatorischen Freiheitsgraden entlang einer vorgegebenen Bahn. Die Pulsfläche wird somit relativ zum Werkstück entlang einer vorgegebenen Bewegungsbahn bewegt, um die Werkstückfläche zu erzeugen.

Bei diesen Verfahren sind die Laserstrahlimpulse, die auf das Werkstück auftreffen, ausschließlich tangential im Sinne der oben angegebenen Definition zu einem bereits hergestellten Abschnitt der herzustellenden Werkstückfläche ausgerichtet. An der aktuellen Materialabtragsstelle verläuft die bereits hergestellte Werkstückfläche tangential zu den einfallenden Laserstrahlimpulsen. Dadurch werden Unebenheiten in der bereits hergestellten Werkstückfläche durch die Laserstrahlimpulse beseitigt, die angrenzend an die bereits hergestellte Werkstückfläche entlang der Außenkontur der Pulsfläche auf das Werkstück einfallen. Dadurch lässt sich eine eine Nutinnenfläche mit einer sehr geringen Rauheit erzeugen.

Der Wärmeeintrag der Laserstrahlimpulse findet jedoch zum allergrößten Teil in das abzutragende Material innerhalb der Pulsfläche statt. Eine wärmebeeinflusste Zone an der hergestellten Werkstückfläche, die die Materialeigenschaften negativ beeinflussen könnte und beispielsweise das Material spröde machen könnte, bildet sich nicht. Die von den Laserstrahlimpulsen gebildete Pulsfläche stellt somit ein Bohrwerkzeug mit veränderbarem, beliebig anpassbarem Querschnitt dar, das entlang der herzustellenden Werkstückfläche fortschreitend durch das Werkstück bewegt wird. Vorzugsweise werden alle Werkstückbereiche bei der Herstellung der Werkstückfläche entfernt, auf die während der Bearbeitung Laserstrahlimpulse einfallen. Es verbleiben somit keine Flächen am Werkstück, die aufgrund der Laserbearbeitung eine zu großen Rauheit aufweisen und deswegen nachbearbeitet werden müssen. Somit kann die Nutinnenfläche einer hergestellten Nut in einem einzigen Durchgang ohne weitere Nachbearbeitung mit geringer Rauheit hergestellt werden.

Das Verfahren eignet sich insbesondere für die Herstellung von zumindest abschnittsweise in eine oder mehrere Raumrichtungen gekrümmten Werkstückflächen, wie Nutinnenflächen von geraden oder spiralförmigen Nuten. Insbesondere bei der Herstellung von geraden Nuten kann es notwendig sein, die Ausbreitungsrichtung der Laserstrahlimpulse gegenüber der Tangenten an die herzustellende Werkstückfläche um zumindest den halben Divergenzwinkel zu neigen, um eine Abschattung der Laserstrahlimpulse durch das Werkstück zu vermeiden.

Es ist außerdem vorteilhaft, wenn die Außenkontur der Pulsfläche während der Bearbeitung verändert wird. Dabei kann die Geometrie der Außenkontur beibehalten und der Flächeninhalt der Pulsfläche vergrößert oder verkleinert, also die Pulsfläche sozusagen skaliert werden. Es ist alternativ oder zusätzlich möglich, die Form bzw. Geometrie der Außenkontur zu ändern. Zum Beispiel kann ein gekrümmter Abschnitt der Außenkontur in einen eckigen Abschnitt verändert werden oder umgekehrt. Dadurch lassen sich komplexe Geometrien, beispielsweise sich verändernde Nutquerschnitte, herstellen. Außerdem ist es beispielsweise möglich, eine Werkstückfläche herzustellen, die an einem Axialabschnitt im Querschnitt einen gekrümmten Verlauf aufweist und an einem anderen Axialabschnitt einen zumindest abschnittweise geradlinigen Querschnitt aufweist bzw. Ecken enthält. Durch eine entsprechende Programmierung bzw. Steuerung des Laserkopfes und der Maschinenantriebseinrichtung kann eine derartige Anpassung realisiert werden.

Die Außenkontur der Pulsfläche hat vorzugsweise einen Abschnitt, der mit einem Abschnitt der Querschnittskontur des Werkstücks an der Materialabtragsstelle übereinstimmt.

Das Verfahren eignet sich insbesondere zur Bearbeitung von Werkstücken, die wenigstens zwei oder auch mehr Werkstückabschnitte aufweisen, wobei jeder Werkstückabschnitt aus einem anderen Material besteht und/oder eine andere Absorptionscharakteristik für das verwendete Laserlicht aufweist. Beispielsweise kann das Werkstück einen Schaft und eine am Schaft befestigte Werkstückspitze aus Diamant aufweisen. Es ist auch möglich, dass das Werkstück an einem Ende eine Beschichtung aus einem anderen Werkstoff aufweist. Die Werkstückfläche wird bei solchen Werkzeugen in einem kontinuierlichen Verfahrensablauf insbesondere unterbrechungslos in beiden Werkstückabschnitten hergestellt. Beispielsweise kann eine Nut sowohl durch eine angebrachte Werkstückspitze, wie auch durch den sich daran anschließenden Schaft axial oder spiralförmig um die Längsachse des Werkstücks verlaufen. Die Werkstückabschnitte können bezüglich der Längsachse des Werkstücks axial und/oder radial aufeinanderfolgend angeordnet sein.

Die beiden Werkstückabschnitte können auf geeignete Weise miteinander verbunden sein, insbesondere durch eine stoffschlüssige Verbindung, beispielsweise durch Kleben oder Löten. Zwischen den beiden Werkstückabschnitten kann bei der Verwendung einer stoffschlüssigen Verbindung eine Verbindungsschicht aus Klebstoff oder aus Lot vorhanden sein. Die Nut wird in diesem Fall auch kontinuierlich durch die Verbindungsschicht zwischen den beiden Werkstückabschnitten hergestellt.

Dadurch, dass die Laserstrahlimpulse tangential zu einem bereits hergestellten Abschnitt der Werkstückfläche im Anschluss an die aktuelle Materialabtragsstelle in der Pulsfläche verlaufen, entstehen durch sich verändernde Materialien oder sich ändernde Absorptionseigenschaften des Werkstücks keine oder lediglich geringe negative Einflüsse auf die Oberflächenqualität der hergestellten bzw. herzustellenden Werkstückfläche.

Zur Vereinfachung der Steuerung des Laserkopfes bzw. des Laserscanners kann der Abstand zwischen den jeweils unmittelbar benachbarten Auftreffstellen in der Pulsfläche bei der Herstellung der Werkstückfläche bei einem Ausführungsbeispiel unverändert bleiben. Abhängig von der Außenkontur der Pulsfläche müssen dabei nicht sämtliche innerhalb der Pulsfläche angeordneten Auftreffstellen denselben Abstand aufweisen.

Erfindungsgemäß ist die Werkstückfläche durch eine Nutinnenfläche gebildet. Bei der Bearbeitung des Werkstücks wird eine Nut im Werkstück erzeugt. Diese Nut wird ausgehend von einem ersten Nutende hergestellt. Die Pulsfläche entspricht dabei dem jeweils herzustellenden Nutquerschnitt. Das dem ersten Nutende entgegengesetzte zweite Nutende wird insbesondere zuletzt hergestellt.

Bei einem Ausführungsbeispiel wird durch das Verfahren die Nuttiefe variiert. Insbesondere kann die Nuttiefe am zweiten Nutende abnehmen und beispielsweise stetig abnehmen, bis die Nutinnenfläche in die Außenfläche des Werkstücks übergeht.

Vorzugsweise kann die Außenkontur der Pulsfläche beim Herstellen des zweiten Nutendes verschieden sein von der Außenkontur der Pulsfläche beim Herstellen des ersten Nutendes. Beispielsweise kann die Außenkontur der Pulsfläche beim Herstellen des ersten Nutendes einen Ellipsenbogen bzw. einen Kreisbogen aufweisen, während die Außenkontur der Pulsfläche beim Herstellen des zweiten Nutendes zumindest einen abschnittsweise geradlinigen Verlauf aufweist, wobei auch eine oder mehrere Ecken gebildet werden können.

Es ist ferner vorteilhaft, wenn der Energieeintrag pro Flächeneinheit durch die in der Pulsfläche auftreffenden Laserstrahlimpulse in einer Randzone der Pulsfläche verschieden ist von dem Energieeintrag pro Flächeneinheit in einer Kernzone der Pulsfläche. Der Energieeintrag pro Flächeneinheit ist in der Randzone vorzugsweise kleiner als in der Kernzone. Die Randzone ist der Bereich der Pulsfläche, der unmittelbar an den bereits hergestellten Abschnitt der Werkstückfläche angrenzt. Die Kernzone der Pulsfläche ist von diesem bereits hergestellten Abschnitt der Werkstückfläche beabstandet. Durch diese Maßnahme kann sichergestellt werden, dass im Bereich der hergestellten bzw. herzustellenden Werkstückfläche keine die Materialeigenschaften negativ beeinflussende wärmebeeinflussende Zone entsteht. Dies kann beispielsweise durch die Dichte bzw. den Abstand der Auftreffstellen in der Randzone gegenüber der Kernzone eingestellt werden.

Mit Hilfe dieses Verfahrens lässt sich ein Werkzeug aus einem Werkstück herstellen, an dem durch die Bearbeitung eine Freifläche und/oder eine Spanfläche und/oder eine Nutinnenfläche erzeugt wurde.

Es ist auch möglich, das vorstehend beschriebene Verfahren lediglich zum Schlichtbearbeiten zu verwenden. Eine Werkstückfläche oder Nutinnenfläche kann durch ein beliebiges Vorbearbeitungsverfahren mit einem verbleibenden Übermaß hergestellt und das erfindungsgemäße Verfahren zur nachfolgenden Herstellung der gewünschten, vorgegebenen Geometrie verwendet werden. Das kann insbesondere dann vorteilhaft sein, wenn das abzutragende Materialvolumen relativ groß ist. Auf diese Weise lässt sich beispielsweise eine scharfe Kante, beispielsweise eine Schneidkante am Rand der Werkstückfläche herstellen.

Vorteilhafte Ausgestaltungen des Verfahrens ergeben sich aus den abhängigen Patentansprüchen, der Beschreibung und der Zeichnung. Nachfolgend werden bevorzugte Ausführungsbeispiele des Verfahrens anhand der beigefügten Zeichnung erläutert. Es zeigen:
Figur 1 eine schematische Darstellung einer Bearbeitungsmaschine, die zur Ausführung des erfindungsgemäßen Verfahrens eingerichtet ist,
Figur 2 eine schematische perspektivische Darstellung eines stabförmigen Werkstücks während der Herstellung einer Werkstückfläche.
Figur 3 eine schematische perspektivische Darstellung eines stabförmigen Werkstücks während der Bearbeitung, wobei die Außenkontur einer für die Bearbeitung vorgegebene Pulsfläche veranschaulicht ist,
Figuren 4 und 5 jeweils ein Beispiel einer Pulsfläche in schematischer Draufsicht,
Figur 6 ein aus einem stabförmigen Werkstück mit Hilfe des erfindungsgemäßen Verfahrens hergestelltes Werkzeug und
Figur 7 eine beispielhafte, schematische Kontur einer herzustellenden Werkstückfläche im Längsschnitt durch das Werkstück sowie die sich bei der Herstellung der Werkstückfläche ändernde Außenkontur der Pulsfläche.

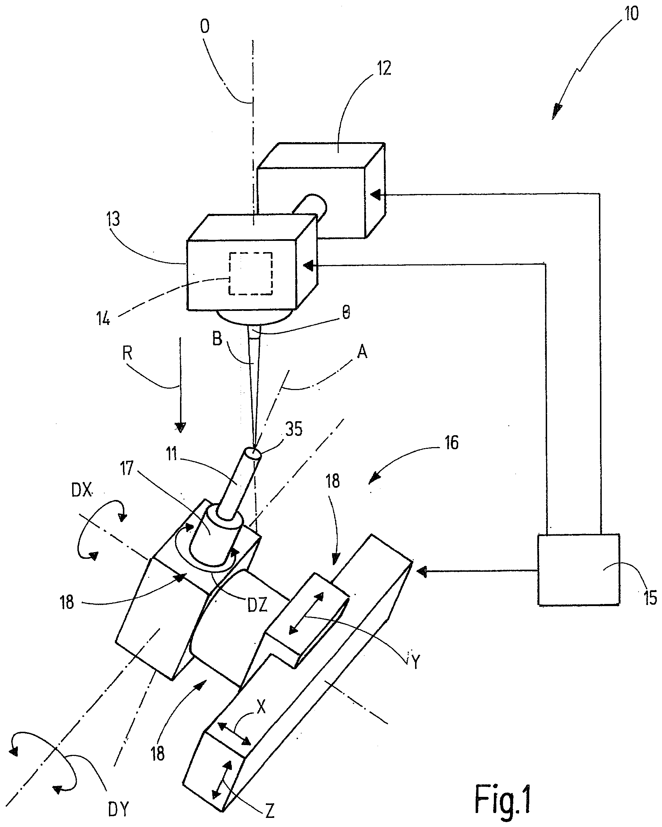

In Figur 1 ist schematisch eine Bearbeitungsmaschine 10 veranschaulicht, die dazu eingerichtet ist, ein erfindungsgemäßes Verfahren zur Bearbeitung eines stabförmigen Werkstücks 11 auszuführen. Das unbearbeitete Werkstück 11 hat eine zylindrische Gestalt und ist beispielsgemäß kreiszylindrisch. Aus dem Werkstück 11 wird durch die Bearbeitung mit der Bearbeitungsmaschine 10 ein Rotationswerkzeug hergestellt, das sich um die Längsachse A des Werkstücks 11 bzw. des daraus hergestellten Werkzeugs dreht.

Die Bearbeitungsmaschine 10 weist einen gepulsten Laser 12 auf, der einen gepulsten Laserstrahl, also Laserstrahlimpulse B erzeugt. Der gepulste Laserstrahl wird vom Laser 12 zu einem Laserkopf 13 übermittelt. Der Laserkopf 13 ist dazu eingerichtet, die Laserstrahlimpulse B bezüglich seiner optischen Achse O in einer vorgegebenen Richtung abzugeben und in einem Arbeitsbereich zu fokussieren. Während der Bearbeitung des Werkstücks 11 befindet sich die aktuell bearbeite Fläche des Werkstücks 11, also die Materialabtragsstelle oder Materialabtragsfläche innerhalb des Arbeitsbereiches.

Der Laserkopf 13 kann Fokussiermittel, wie optische Linsen oder dergleichen aufweisen. Dadurch erhält der Laserstrahlimpuls B einen Divergenzwinkel θ, der schematisch in Figur 1 veranschaulicht ist. Der Divergenzwinkel im Fernfeld ist sozusagen der Öffnungswinkel der Laserstrahlimpulses von dem Fokussiermittel des Laserkopfes 13 bis zum Arbeitsbereich. Außerdem weist der Laserkopf 13 eine Ablenkeinrichtung 14 auf, die auch als Laserscanner bezeichnet werden kann. Die Ablenkeinrichtung 14 kann beispielsweise einen oder mehrere Ablenkspiegel aufweisen und dient dazu, die Austrittsrichtung der Laserstrahlimpulse B gegenüber der optischen Achse O einzustellen.

Die Bearbeitungsmaschine 10 hat zur Ansteuerung des Lasers 12 und des Laserkopfes 13 eine Steuereinheit 15.

Die Steuereinheit 15 steuert außerdem eine Maschinenantriebseinrichtung 16 der Bearbeitungsmaschine 10 an. Die Maschinenantriebseinrichtung 16 ist dazu eingerichtet, eine Relativbewegung zwischen dem Laserkopf 13 und einer Spanneinrichtung 17 zum Einspannen des stabförmigen Werkstücks 11 in der Bearbeitungsmaschine 10 zu erzeugen. Dabei erzeugt die Maschinenantriebseinrichtung 16 eine Relativbewegung zwischen dem eingespannten Werkstück 11 und dem Laserkopf 13.

Die Maschinenantriebseinrichtung 16 weist zur Ausrichtung und/oder Positionierung und/oder Bewegung der Spanneinrichtung 17 relativ zum Laserkopf 13 bzw. umgekehrt für jeden vorhandenen translatorischen Freiheitsgrad X, Y, Z und für jeden vorhandenen rotatorischen Freiheitsgrad DX, DY, DZ jeweils einen Maschinenachsantrieb 18 auf, von denen in Figur 1 lediglich stark schematisiert ein Teil der Maschinenachsantriebe 18 veranschaulicht ist. Die Anzahl der translatorischen und/oder rotatorischen Freiheitsgrade X, Y, Z, DX, DY, DZ kann variieren, wobei insgesamt bis zu sechs Freiheitsgrade vorgesehen werden können.

Alternativ zu der Darstellung in Figur 1 kann auch der Laserkopf 13 über einen oder mehrere Maschinenachsantriebe 18 in jeweils einem Freiheitsgrad bewegbar sein. Entscheidend ist lediglich die Relativbewegung des Werkstücks 11 bzw. der Spanneinrichtung 17 gegenüber dem Laserkopf 13.

Die Laserstrahlimpulse B werden in einer Abstrahlrichtung R vom Laserkopf 13 auf das Werkstück 11 gerichtet. Der Flächenbereich der Werkstückoberfläche, auf dem die Laserstrahlimpulse B auftreffen und in dem ein Materialabtrag stattfindet, ist durch eine Pulsfläche 22 definiert. Die Pulsfläche 22 wird durch die Ablenkeinrichtung 14 erzeugt.

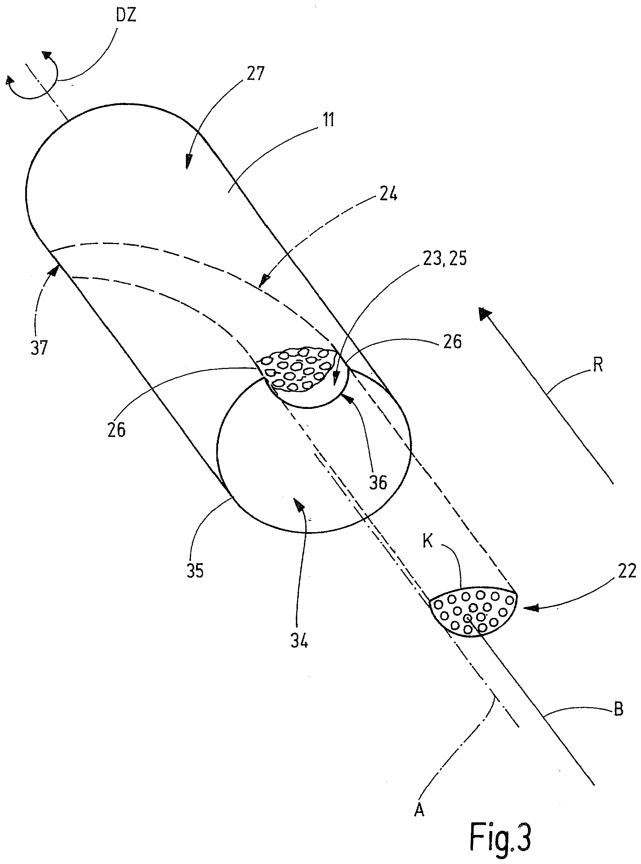

Die Pulsfläche 22 ist beispielhaft insbesondere aus den Figuren 3 bis 5 zu erkennen. Die Pulsfläche 22 hat eine Außenkontur K. Die Außenkontur K ist so ausgewählt bzw. vorgegeben, dass die Außenkontur K an eine herzustellende Werkstückfläche 23 angepasst ist.

Bei dem hier beschriebenen Ausführungsbeispiel wird an dem Werkstück 11 wenigstens eine Nut 24 hergestellt, die eine Nutinnenfläche 25 aufweist. Die Nutinnenfläche 25 ist die gesamte beim Herstellen der Nut 24 entstehende Fläche. Im vorliegenden Fall ist die herzustellende Werkstückfläche 23, also durch die Nutinnenfläche 25 gebildet. Beim Ausführungsbeispiel ist die herzustellenden Nut 24 im Querschnitt gesehen an jeder Stelle rinnenförmig ausgeführt. Die beiden Nutkanten 26, an denen die Nut 24 in die ursprüngliche Außenoberfläche 27 übergeht, haben beim Ausführungsbeispiel denselben Radialabstand von der Längsachse A. Die herzustellende Nut 24 kann in Richtung der Längsachse A geradlinig oder - wie hier veranschaulicht - spiralförmig um die Längsachse A verlaufen. Es kann sich beispielsweise um eine Spannut an dem aus dem Werkstück 11 herzustellenden Werkzeug 40 handeln.

Alternativ zu der beschriebenen Nut 24 können auch andere Flächen mit Hilfe der Bearbeitungsmaschine 10 und dem erfindungsgemäßen Verfahren am Werkstück 11 erzeugt werden, beispielsweise Freiflächen oder Spanflächen angrenzend an eine Schneidkante.

Die Außenkontur K der Pulsfläche 22 entspricht einem Materialquerschnitt, der an die herzustellende Werkstückfläche 23 angrenzt und vom Werkstück 11 entfernt werden soll. Bei dem hier beschriebenen Ausführungsbeispiel entspricht die Außenkontur K der Pulsfläche 22 somit dem Nutquerschnitt der herzustellenden Nut 24. Die Außenkontur K hat beispielsgemäß einen ersten Außenkonturabschnitt K1, der während der Werkstückbearbeitung unmittelbar an die herzustellende Querschnittsfläche 23, hier also die Nutinnenfläche 25, angrenzt. Die Außenkontur K hat außerdem einen zweiten Außenkonturabschnitt K2, der bei der Bearbeitung des Werkstücks 11 zumindest in etwa einem Querschnittskonturabschnitt der ursprünglichen Werkstück-Querschnittskontur (der ursprünglichen Außenfläche 27 des Werkstücks) entspricht. Beim Ausführungsbeispiel sind beide Außenkonturabschnitte K1, K2 gekrümmt und stoßen unter Bildung von zwei Ecken aneinander an. Abhängig von der herzustellenden Geometrie, beispielsgemäß der Nutgeometrie, können auch Außenkonturen K mit abschnittsweise geradlinigem Verlauf oder Kombinationen aus geradlinigen oder gekrümmten Abschnitten vorgesehen sein.

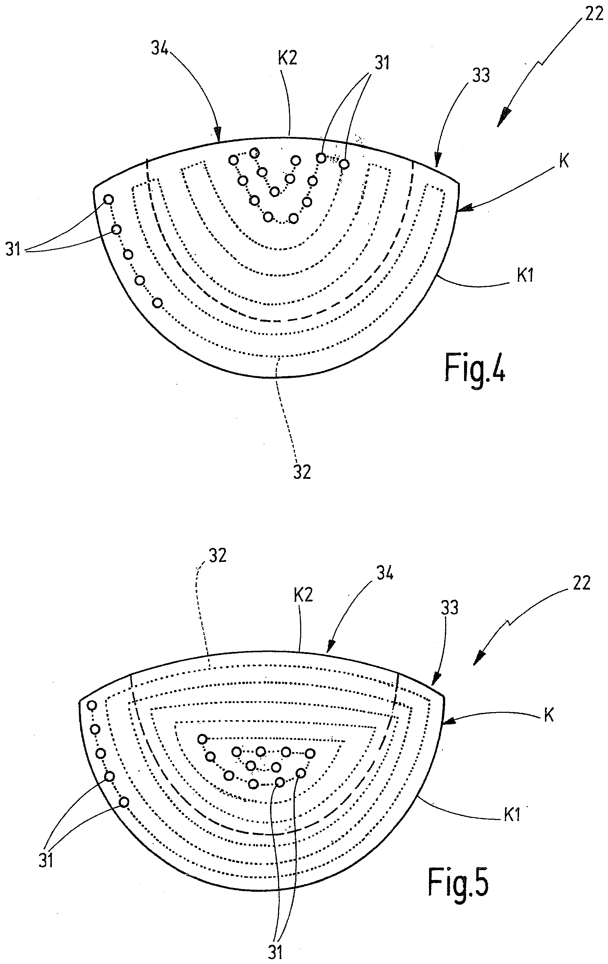

Innerhalb der Außenkonturfläche K befindet sich eine Vielzahl von Auftreffstellen 31. Die Auftreffstellen 31 sind innerhalb der Außenkontur K verteilt angeordnet. Der Abstand zwischen unmittelbar benachbarten Auftreffstellen 31 kann innerhalb der Pulsfläche 22 gleichmäßig sein oder variieren. Dies hängt zum einen von der Geometrie der Außenkontur K und zum anderen davon ab, ob der Energieeintrag pro Flächeneinheit innerhalb der Pulsfläche 22 gleichmäßig oder ungleichmäßig erfolgen soll. Zu jeder Außenkontur K kann in der Steuereinheit 15 eine definierte Anordnung der Auftreffstellen 31 vorgegeben und/oder abgespeichert werden. Die Steuereinheit 15 steuert die Ablenkeinrichtung 14 während der Bearbeitung des Werkstücks 11 derart an, dass die Laserstrahlimpulse B während einer Sequenz entsprechend einer vorgegebenen Reihenfolge auf die Auftreffstellen 31 innerhalb der Außenkontur K gerichtet werden. Nach dem Abschluss einer Sequenz ist auf jede Auftreffstelle 31 zumindest ein Laserstrahlimpuls gerichtet worden. Diese Sequenz wird zyklisch wiederholt. Beispielsweise können die Laserstrahlimpulse von einer Auftreffstelle 31 zur nächsten Auftreffstelle 31 entlang einer Pulsbahn 32 bewegt werden. In den Figuren 4 und 5 sind zwei beispielhafte Ausführungsformen für solche Pulsbahnen 32 schematisch veranschaulicht. Die Pulsbahn 32 gemäß Figur 4 mäandriert innerhalb der Pulsfläche 22, während die Pulsbahn 32 beispielsweise einen spiralförmigen Verlauf aufweist. Hiervon abweichende andere Pulsbahnen 32 bzw. Sequenzen oder Reihenfolgen zum Richten der Laserstrahlimpulse B auf die Auftreffstellen 31 sind möglich.

In der Pulsfläche 22 kann eine Randzone 33 vorhanden sein, die in den Figuren 4 und 5 gestrichelt eingezeichnet ist. Die Randzone 33 grenzt an den ersten Außenkonturabschnitt K1 an. Die nicht zur Randzone 33 gehörenden Flächenabschnitte der Pulsfläche 22 bilden eine Kernzone 34, die somit von dem ersten Außenkonturabschnitt K1 beabstandet ist. Der Energieeintrag pro Flächeneinheit kann beim Ausführungsbeispiel in der Randzone 33 kleiner sein als in der Kernzone 34 der Pulsfläche 22. Zumindest ist der Energieeintrag pro Flächeninhalt der auf die Auftreffstellen 31 in der Randzone 33 gerichteten Laserstrahlimpulse kleiner als ein vorgegebener Maximalwert. Dadurch wird sichergestellt, dass beim Entfernen von Material während der Bearbeitung des Werkstücks 11 durch einen zu großen Energieeintrag im Bereich der Randzone 33 keine wärmebeeinflusste Zone an der herzustellenden Werkstückfläche 23 bzw. der Nutinnenfläche 25 entsteht. Durch eine solche wärmebeeinflusste Zone kann das Material des Werkstücks 11 spröde werden und deshalb eine Nachbearbeitung der hergestellten Werkstückfläche 23 erfordern. Demgegenüber hat die Kernzone 34 einen ausreichenden Abstand zum ersten Außenkonturabschnitt K1 und mithin zu den Materialbereichen des Werkstücks 11, die später die Werkstückfläche 23 bilden, so dass in der Kernzone 34 der Energieeintrag pro Flächeninhalt größer gewählt werden kann als in der Randzone 33.

Der Energieeintrag pro Flächeninhalt kann beispielsweise durch die Dichte der Auftreffstellen innerhalb der Pulsfläche 22, also innerhalb der Randzone 33 bzw. der Kernzone 34 variiert werden. Alternativ oder zusätzlich können auch Parameter des Lasers 12 verändert werden, beispielsweis die Dauer eines Laserstrahlimpulses B und/oder die Laserleistung.

Bei dem Verfahren zur Herstellung der Werkzeugfläche 23 unter Verwendung der Bearbeitungsmaschine 10 wird wie folgt vorgegangen:
Mit Hilfe der Maschinenantriebseinrichtung 16 wird eine Ausgangsposition des unbearbeiteten Werkstücks 11 gegenüber dem Laserkopf 13 eingestellt. Über die Steuereinheit 15 wird während des Verfahrens die Maschinenantriebseinrichtung 16 gesteuert, um das Werkstück 11 relativ zum Laserkopf 13 zu bewegen und/oder auszurichten. Der Bewegungsablauf ist in der Steuereinheit 15 vorgegeben und insbesondere programmiert. Für einen bestimmten Werkstücktyp lassen sich beispielsweise aus einer Bibliothek die geeigneten Verfahrensabläufe aufrufen. Abhängig von der zu erzeugenden Werkstückfläche bzw. Werkstückgeometrie wird durch die Steuereinheit 15 während des Verfahrens auch der Laserkopf 13 bzw. die Ablenkeinrichtung 14 angesteuert, um die einer jeweils aktuellen Relativposition zwischen dem Werkstück 11 und dem Laserkopf 13 zugeordnete Außenkontur K der Pulsfläche 22 einzustellen. Die Außenkontur K kann während des Verfahrens konstant bleiben oder sich ändern. Eine sich ändernde Außenkontur K kann lediglich in einer Skalierung des Flächeninhalts unter Beibehaltung der geometrischen Form der Außenkontur K durchgeführt werden. Alternativ oder zusätzlich kann auch die geometrische Form der Außenkontur K geändert werden.

Bei dem hier beschriebenen Ausführungsbeispiel wird eine Nut 24 in dem ursprünglichen zylindrischen Werkstück 11 erzeugt. Die Nut 24 hat im Bereich der Stirnseite 34 an einem freien Ende 35 des Werkstücks 11 ein erstes Nutende 36 und beabstandet dazu ein entgegengesetztes zweites Nutende 37. Die Nut 24 wird ausgehend vom freien Ende 35 des Werkstücks erzeugt, so dass zunächst das erste Nutende 36 erzeugt wird. Anschließend wird die Nut 24 entlang ihrer Verlaufsrichtung ausgehend vom ersten Nutende 36 durch Materialabtrag verlängert, bis schließlich das zweite Nutende 37 fertiggestellt ist.

Über die Maschinenantriebseinrichtung 16 wird der Abstand des Werkstücks 11 vom Laserkopf 13 stets so eingestellt, dass die aktuell bearbeitete Stelle des Werkstücks 11 innerhalb des fokussierten Arbeitsbereichs der Laserstrahlimpulse B liegt. Dabei wird das Werkstück 11 gegenüber der Abstrahlrichtung R derart ausgerichtet, dass die Laserstrahlimpulse B parallel bzw. tangential zu dem Abschnitt der Werkstückfläche 23 bzw. Nutinnenfläche 25 auf das Werkstück 11 auftreffen, der entgegen der Abstrahlrichtung R unmittelbar benachbart zur Materialabtragsstelle, also zur Pulsfläche 22, angeordnet ist. Mit anderen Worten verlaufen die Laserstrahlimpulse B in einem Abschnitt benachbart zur Pulsfläche 22 bzw. zu den Auftreffstellen 31 tangential zu einem bereits hergestellten Flächenabschnitt der Werkstückfläche 23 bzw. Nutinnenfläche 25, der unmittelbar an die Pulsfläche 22 anschließt. "Tangential" bedeutet, dass der Winkel zwischen der Ausbreitungsrichtung bzw. der Längsmittelachse eines Laserstrahlimpulses B und einer unmittelbar angrenzend an die Materialabtragsstelle an den Flächenabschnitt der hergestellten Werkstückfläche 23 angelegten Tangente kleiner ist als der Divergenzwinkel θ oder kleiner ist als der halbe Divergenzwinkel θ.

Die Pulsfläche 22 ist während der Bearbeitung so vorgegeben, dass sie sich stets in einer Querschnittsebene der Nut 24 befindet. Die Pulsfläche 22 wird während der Bearbeitung sozusagen in Verlaufsrichtung der Nut 24 ausgehend vom ersten Nutende 36 bis zum zweiten Nutende 37 durch das Werkstück 11 bewegt, bis die Nut 24 vollständig hergestellt ist. Die hierfür erforderliche Relativbewegung wird durch eine oder mehrere Maschinenachsantriebe 18 in den entsprechenden Freiheitsgraden X, Y, Z, DX, DY, DZ bewirkt.

Die Außenkontur K der Pulsfläche 22 kann zu jedem Zeitpunkt der herzustellenden Querschnittskontur der Nut 24 entsprechen. Ein Verschieben der Pulsfläche innerhalb einer Ebene, in der sich die Pulsfläche 22 erstreckt, findet in diesem Fall nicht statt. Vielmehr wird die Pulsfläche 22 relativ zum Werkstück 11 in ihrer Normalenrichtung und mithin in Abstrahlrichtung R bewegt. Alternativ dazu ist es auch möglich, die Außenkontur K der Pulsfläche in zumindest einer Dimension kleiner zu wählen als die herzustellende Querschnittskontur der Nut 24. In diesem Fall wird die Pulsfläche zusätzlich in der Querschnittsebene der Nut 24 bewegt bzw. verlagert, um die gewünschte Querschnittskontur der Nut 24 zu erreichen.

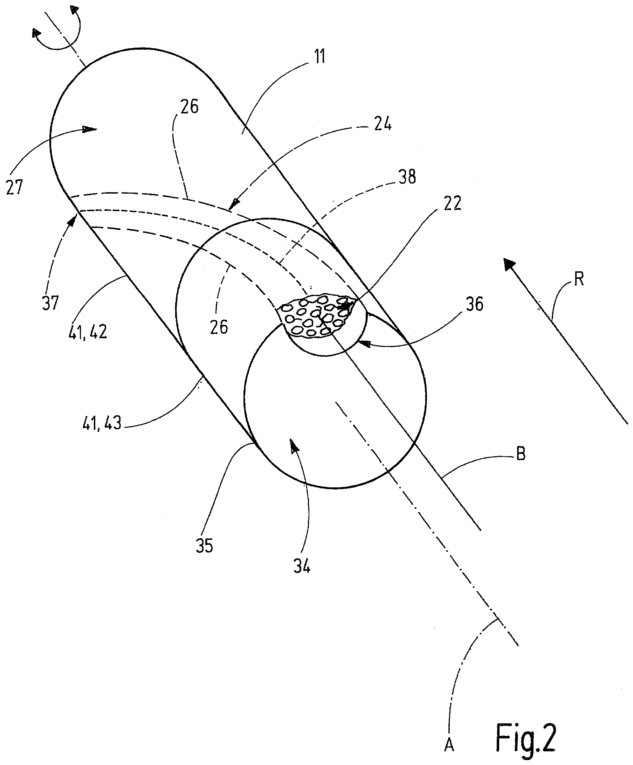

Während des Materialabtrags wird durch die Relativausrichtung bzw. Relativbewegung des Werkstücks 11 gegenüber dem Laserkopf 13 die Pulsfläche 22 sozusagen entlang einer vorgegebenen Bewegungsbahn 38 (Figur 2) relativ zum Werkstück 11 bewegt, beispielsgemäß vom ersten Nutende 36 zum zweiten Nutende 37 hin.

Dadurch ist erreicht, dass die Bereiche des Werkstücks 11, auf die die Laserstrahlimpulse B auftreffen, bereits beim und durch das Herstellen der Werkstückfläche 23 bzw. der Nutinnenfläche 25 vollständig entfernt werden. Flächenbereiche, auf denen die Laserstrahlimpulse B auftreffen, haben nach der Herstellung in der Regel eine zu große Rauheit bzw. sind durch den Energieeintrag, also die Wärme, beeinflusst. Häufig ist das Material des Werkstücks dort spröde. Um eine solche wärmebeeinflusste Zone wieder zu entfernen und/oder die Rauheit zu verringern, findet dann häufig eine Nachbearbeitung statt. Dies kann bei dem hier vorgeschlagenen Verfahren entfallen. Die hergestellte Werkstückfläche 23 ist an der Materialabtragsstelle stets im Wesentlichen rechtwinklig zu der Pulsfläche 22 ausgerichtet, so dass dort wo die Laserstrahlimpulse B auftreffen, eine Glättung der angrenzenden, bereits hergestellten Werkstückfläche 23 erfolgt. Sollten dort kleinere Bereiche in das Lichtraumprofil der Pulsfläche 22 hineinragen, werden diese durch die auf die Pulsfläche 22 gerichteten Laserstrahlimpulse entfernt und die bereits hergestellte Werkstückfläche 23 erhält eine sehr geringe Rauheit. Die Werkstückfläche 23 kann somit in einem Zug beim Entfernen des Materials hergestellt werden.

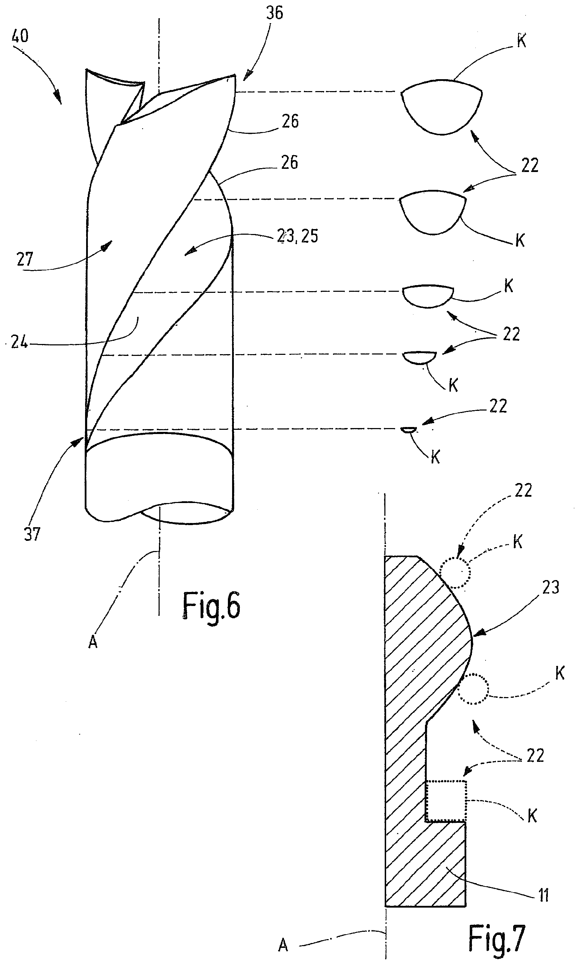

In Figur 6 ist beispielhaft ein hergestelltes Werkzeug 40 mit mehreren hergestellten Nuten 24 veranschaulicht. Die Nuten 24 sind dort beispielsgemäß spiralförmig um die Längsachse A angeordnet. Während der Herstellung dieser Nuten 24 wurde die Außenkontur K der Pulsfläche 22 verändert, um an unterschiedlichen Axialpositionen relativ zur Längsachse A des Werkzeugs 40 unterschiedliche Nutquerschnitte zu erreichen. So nehmen die Nuttiefe und auch die Nutbereite ausgehend vom ersten Nutende 36 zum zweiten Nutende 37 ab. An verschiedenen Axialpositionen ist schematisch die jeweilige eingestellte Außenkontur K der Pulsfläche 22 veranschaulicht. Die rinnenförmige Gestalt der Nut 24 und mithin der Außenkontur K der Pulsfläche 22 bleibt erhalten. An dem zweiten Nutende 37 geht die hergestellte Nutinnenfläche 25 in die ursprüngliche Außenoberfläche 27 des unbearbeiteten Werkstücks 11 über.

Mit einem solchen Verfahren lassen sich sehr vorteilhaft Werkstücke 11 bearbeiten, die zwei oder mehr Werkstückabschnitte 41 aus unterschiedlichen Materialien oder mit unterschiedlichen Absorptionscharakteristika für das verwendete Laserlicht aufweisen. Ein solches Werkstück 11 ist sehr stark schematisiert und lediglich beispielhaft in Figur 2 veranschaulicht. Dort ist beispielsweise der eine Werkstückabschnitt 41 durch einen Hartmetallschaft 42 gebildet, der ein Endstück 43 trägt, das den anderen Werkstückabschnitt 41 bildet. Das Endstück 43 kann beispielsweise aus einem sehr widerstandsfähigen, harten Material bestehen, wie zum Beispiel Diamant. Es versteht sich, dass das Werkstück 11 auch mehr als zwei Werkstückabschnitte 41 aufweisen könnte.

Die beiden Werkstückabschnitte 41 können wie in Figur 2 veranschaulicht axial in Richtung der Längsachse A aufeinanderfolgend angeordnet sein. Alternativ oder zusätzlich könnten die beiden Werkstückabschnitte 41 auch radial zur Längsachs A aufeinanderfolgend angeordnet sein. Sie können sich mit anderen Worten in Axialrichtung und/oder in Radialrichtung übergreifen bzw. überlappen. Es ist auch möglich, wenigstens einen Werkstückabschnitt 41 durch eine Beschichtung eines anderen Werkstückabschnitts 41 auszuführen.

Bei dem hier beschriebenen Beispiel sind die beiden Werkstückabschnitte 41 und beispielsgemäß der Hartmetallschaft 42 und das Endstück 43 miteinander verbunden, vorzugweise stoffschlüssig verbunden. Die stoffschlüssige Verbindung kann durch Kleben oder Löten hergestellt sein. Dabei kann zwischen den beiden Werkstückabschnitten 41 eine Verbindungsschicht aus Klebstoff oder Lot vorhanden sein.

Dadurch, dass die herzustellende Werkstückfläche 23 durch stets tangential zur herzustellenden Werkstückfläche 23 (bezogen auf die Materialabtragsstelle) einfallende Laserstrahlimpulse B erzeugt wird, kann der Materialabtrag auch durchgängig bzw. unterbrechungslos durch die verschiedenen Werkstückabschnitte 41 mit unterschiedliche Absorptionscharakteristiken ausgeführt werden. Zwar kann abhängig von der Absorptionscharakteristik des jeweiligen Werkstückabschnitts 41 die Abtragsrate variieren, allerdings bleibt die Qualität und insbesondere die Rauheit der hergestellten Werkstückfläche 23 davon unbeeinträchtigt. Somit lassen sich beispielsweise Werkzeuge mit einem Hartmetallschaft 42 und einer aus dem Endstück 43 gebildeten Werkzeugspitze erzeugen, wobei die hergestellten Werkstückflächen bzw. hergestellten Nuten 24 sowohl durch das Endstück 43, als auch durch den Hartmetallschaft 42 verlaufen, wie es in Figur 2 schematisch veranschaulicht ist.

Bei einem weiteren Ausführungsbeispiel des Verfahrens kann zusätzlich oder alternativ zu der Änderung der Außenkontur K gemäß Figur 6, auch die geometrische Form der Außenkontur K verändert werden, was sehr schematisch in Figur 7 veranschaulicht ist. Dort wird beispielsweise ein gekrümmter Bereich der herzustellenden Werkstückfläche 23 durch eine kreisförmige Außenkontur K der Pulsfläche 22 hergestellt, während mit Hilfe einer mehreckigen, beispielsgemäß viereckigen und insbesondere rechteckigen oder quadratischen Form der Außenkontur K in einem Endbereich der hergestellten Werkzeugfläche 23 eine Ecke erzeugt wird. Mit Hilfe einer solchen Anpassung der Geometrie der Außenkontur K kann beispielsweise eine Nut 24 erzeugt werden, an deren zweitem Nutende 37 Kanten und/oder Ecken und/oder Absätze an dem Werkzeug 40 hergestellt werden können.

Die Erfindung betrifft ein Verfahren zur Herstellung einer Werkstückfläche 23 bzw. einer Nutinnenfläche 25 an einem stabförmigen, insbesondere zylindrischen Werkstück 11. Aus dem Werkstück 11 soll ein Rotationswerkzeug 40 hergestellt werden. Der Materialabtrag zur Herstellung der Werkstückfläche 23 erfolgt mit Hilfe von Laserstrahlimpulsen B, die über eine Ablenkeinrichtung 14 auf Auftreffstellen 31 innerhalb einer Pulsfläche 22 mit einer vorgegebenen Außenkontur K auf das Werkstück 11 gerichtet werden. Über eine oder mehrere Maschinenachsantriebe 18, insbesondere CNC-Achsen erfolgt dabei eine Ausrichtung bzw. Positionierung bzw. Bewegung zwischen dem Werkstück 11 und der Ablenkeinrichtung 14 derart, dass die Pulsfläche 22 mit den darin angeordneten Auftreffstellen 31 für die Laserstrahlimpulse B im Wesentlichen rechtwinklig zur Abstrahlrichtung R der Laserstrahlimpulse und rechtwinklig zu dem Abschnitt der Werkzeugfläche 23 ausgerichtet ist, der bereits hergestellt wurde und an die Pulsfläche 22 angrenzt. Während des Materialabtrags wird über den wenigstens einen Maschinenachsantrieb 18 die Pulsfläche 22 entlang einer vorgegebenen Bewegungsbahn 38 unter Beibehaltung der Ausrichtung, also stets rechtwinklig zum unmittelbar anschließenden, bereits hergestellten Abschnitt der Werkstückfläche 22 relativ zum Werkstück 11 bewegt. Auf diese Weise kann beispielsweise eine Nut 24 mit einer Nutinnenfläche 25 ausgehend von einem ersten Nutende 36 am freien Ende 35 des Werkstücks bis zu einem entgegengesetzten freien Nutende 37 in Verlaufsrichtung der Nut 24 hergestellt werden. Die Außenkontur K der Pulsfläche 22 kann dabei jeweils dem herzustellenden Querschnitt der Nut 24 entsprechen oder zumindest innerhalb dem herzustellenden Querschnitt der Nut 24 liegen.

### Bezugszeichenliste:

- 10: Bearbeitungsmaschine
- 11: Werkstück
- 12: Laser
- 13: Laserkopf
- 14: Ablenkeinrichtung
- 15: Steuereinheit
- 16: Maschinenantriebseinrichtung
- 17: Spanneinrichtung
- 18: Maschinenachsantrieb

- 22: Pulsfläche
- 23: Werkstückfläche
- 24: Nut
- 25: Nutinnenfläche
- 26: Nutkante
- 27: ursprüngliche Außenoberfläche des Werkstücks

- 31: Auftreffstelle
- 32: Pulsbahn
- 33: Randzone
- 34: Stirnseite
- 35: freies Ende des Werkstücks
- 36: erstes Nutende
- 37: zweites Nutende
- 38: Bewegungsbahn

- 40: Werkzeug
- 41: Werkstückabschnitt
- 42: Hartmetallschaft
- 43: Endstück
- θ: Divergenzwinkel der Laserstrahlimpulse
- A: Längsachse des Werkstücks
- B: Laserstrahlimpuls
- DX: rotatorischer Freiheitsgrad
- DY: rotatorischer Freiheitsgrad
- DZ: rotatorischer Freiheitsgrad
- K: Außenkontur
- K1: erster Außenkonturabschnitt
- K2: zweiter Außenkonturabschnitt

- O: optische Achse des Laserkopfes
- R: Abstrahlrichtung
- x: translatorischer Freiheitsgrad
- y: translatorischer Freiheitsgrad
- z: translatorischer Freiheitsgrad

## Patentansprüche

1. Verfahren zur Herstellung einer von einer Nutinnenfläche (25) einer Nut (24) gebildeten Werkstückfläche (23) an einem stabförmigen Werkstück (11), wobei die Nut (24) ausgehend von einem ersten Nutende (36) hergestellt wird, unter Verwendung einer Bearbeitungsmaschine (10), die einen Laser (12) aufweist, der Laserstrahlimpulse (B) erzeugt, mit einem Laserkopf (13), der die Laserstrahlimpulse (B) des Lasers (12) auf das Werkstück (11) richtet, und mit einer Maschinenantriebseinrichtung (16), die wenigstens einen Maschinenachsantrieb (18) aufweist, der dazu eingerichtet ist, das Werkstück (11) und den Laserkopf (13) in wenigstens einem translatorischen und/oder rotatorischen Freiheitsgrad (X, Y, Z, DX, DY, DZ) relativ zueinander zu bewegen, mit folgenden Schritten:
- Positionieren und/oder Ausrichten des Werkstücks (11) relativ zu dem Laserkopf (13),
- Vorgeben und/oder Auswählen einer Außenkontur (K) einer Pulsfläche (22), sowie von innerhalb der Pulsfläche (22) angeordneten, voneinander beabstandeten Auftreffstellen (31), auf die die Laserstrahlimpulse (B) vom Laserkopf (13) in einer vorgegebenen Sequenz abgegeben werden, derart, dass die Außenkontur (K) der Pulsfläche (22) der Querschnittskontur der herzustellenden Nut (24) entspricht,
- Abgeben der Laserstrahlimpulse (B) über den Laserkopf (13) in einer Abstrahlrichtung (R) auf das Werkstück (11) auf die vorgegebenen Auftreffstellen (31) innerhalb der Pulsfläche (22), wobei die Laserstrahlimpulse (B) während der Bearbeitung tangential zu dem durch die Bearbeitung des Werkstücks (11) erzeugten Abschnitt der Werkstückfläche (23) ausgerichtet sind, der an die Pulsfläche (22) angrenzt,
- Bewegen des Laserkopfes (13) und/oder des Werkstücks (11) derart relativ zueinander, dass sich die Pulsfläche (22), an der der Materialabtrag stattfindet, ausschließlich in der Abstrahlrichtung (R) einer vorgegebenen Bewegungsbahn (38) folgend gegenüber dem Werkstück (11) bewegt um die Werkstückfläche (23) zu erzeugen.

2. Verfahren nach Anspruch 1,
**dadurch gekennzeichnet, dass** alle Werkstückbereiche benachbart zu der hergestellten Werkstückfläche (23), auf die bei der Bearbeitung Laserstrahlimpulse (B) auftreffen, bereits durch die und bei der Herstellung der Werkstückfläche (23) vollständig entfernt werden.

3. Verfahren nach Anspruch 1 oder 2,
**dadurch gekennzeichnet, dass** die Laserstrahlimpulse (B), die auf die Auftreffstellen (31) der Pulsfläche (22) gerichtet sind, tangential zumindest zu dem benachbarten, bereits hergestellen Abschnitt der Werkstückfläche (23) ausgerichtet sind und die Rauheit dieses benachbarten Abschnitts der Werkstückfläche (23) reduzieren.

4. Verfahren nach einem der vorhergehenden Ansprüche,
**dadurch gekennzeichnet, dass** die Außenkontur (K) der Pulsfläche (22) abhängig von der aktuellen Relativposition und/oder Relativausrichtung des Werkstücks (11) gegenüber dem Laserkopf (13) verändert wird.

5. Verfahren nach einem der vorhergehenden Ansprüche,
**dadurch gekennzeichnet, dass** das Werkstück (11) wenigstens zwei Werkstückabschnitte (41) aufweist, die unterschiedliche Absorptionscharakteristika für das verwendete Laserlicht aufweisen und die Werkstückfläche (23) durch einen kontinuierlichen Verfahrensablauf in den beiden Werkstückabschnitten (41) hergestellt wird.

6. Verfahren nach Anspruch 4,
**dadurch gekennzeichnet, dass** die beiden Werkstückabschnitte (41) aus stoffschlüssig miteinander verbundenen Teilen (42, 43) bestehen.

7. Verfahren nach einem der vorhergehenden Ansprüche,
**dadurch gekennzeichnet, dass** der Abstand zwischen unmittelbar benachbarten Auftreffstellen (31) in der Pulsfläche (22) während der Herstellung der Werkstückfläche (23) konstant bleibt.

8. Verfahren nach einem der vorhergehenden Ansprüche,
**dadurch gekennzeichnet, dass** die Nut (24) ein dem ersten Nutende (36) entgegengesetztes zweites Nutende (37) aufweist, das zuletzt hergestellt wird.

9. Verfahren nach Anspruch 8,
**dadurch gekennzeichnet, dass** die Nuttiefe im Bereich des zweiten Nutendes (37) abnimmt.

10. Verfahren nach Anspruch 8 oder 9,
**dadurch gekennzeichnet, dass** die Außenkontur (K) der Pulsfläche (22) beim Herstellen des zweiten Nutendes (37) verschieden ist von der Außenkontur (K) der Pulsfläche (22) beim Herstellen des ersten Nutendes (36).

11. Verfahren nach einem der vorhergehenden Ansprüche,
**dadurch gekennzeichnet, dass** der Energieeintrag der Laserstrahlimpulse (B) pro Flächeneinheit in eine Randzone (33) der Pulsfläche (22), die an die herzustellende bzw. hergestellte Werkstückfläche (23) angrenzt, größer oder kleiner ist als in einer von der herzustellenden bzw. hergestellten Werkstückfläche (23) beabstandeten Kernzone (34) der Pulsfläche (22).

12. Verfahren nach einem der vorhergehenden Ansprüche,
**dadurch gekennzeichnet, dass** es bei der Herstellung eines Werkzeuges (40) aus dem Werkstück (11) eingesetzt wird.

13. Verfahren zur Herstellung einer scharfen Kante an einem Rand einer Werkstückfläche (23) eines Werkstücks (11), **dadurch gekennzeichnet, dass** zuerst eine Fläche an dem Werkstück (11) erzeugt wird, die zumindest um die Kante herum ein Aufmaß aufweist und anschließend dieses Aufmaß nach dem Verfahren gemäß einem der vorstehenden Patentansprüche entfernt wird.

## Claims

1. A method to produce a groove inner surface (25) of a groove (24) forming a workpiece surface (23) on a rod-shaped workpiece (11), whereby the groove (24) is produced starting from a first groove end (36) using a machining machine (10) comprising a laser (12) that produces laser beam impulses (B), with a laser head (13) that directs the laser beam impulses (B) of the laser (12) onto the workpiece (11), and with a machine drive unit (16) that has at least one machine axis drive (18) that is configured to move the workpiece (11) and the laser head (13) relative to one another in at least one translational and/or rotational degree of freedom (X, Y, Z, DX, DY, DZ), comprising the following steps:
- Positioning and/or orienting the workpiece (11) relative to the laser head (13);
- Specifying and/or selecting an outside contour (K) of a pulse area (22) and points of incidence (31) separated from one another and arranged within the pulse area (22), onto which the laser beam impulses (B) from the laser head (13) are emitted in a specified sequence, such that the outside contour (K) of the pulse area (22) corresponds to the cross sectional contour of the groove (24) to be produced,
- Emitting the laser beam impulses (B) via the laser head (13) in an emission direction (R) onto the workpiece (11) onto the specified points of incidence (31) within the pulse area (22), wherein, during the machining, the laser beam impulses (B) are oriented tangential to the section of the workpiece surface (23) that is produced by the machining of the workpiece (11) and that borders the pulse area (22);
- Moving the laser head (13) and/or the workpiece (11) relative to one another in such a way that the pulse area (22) on which the material removal takes place is moved with respect to the workpiece (11) exclusively in the emission direction (R) following a specified path of motion (38) to produce the workpiece surface (23).

2. The method according to Claim 1,
**characterized in that** all workpiece areas adjacent to the workpiece surface (23) that is produced on which laser beam impulses (B) impinge during machining are already completely removed due to the production and during production of the workpiece surface (23).

3. The method according to claim 1 or 2,
**characterized in that** the laser beam impulses (B) that are directed onto the points of incidence (31) of the pulse area (22), are oriented tangential at least to the adjacent, already produced section of the workpiece surface (23), and reduce the roughness of this adjacent section of the workpiece surface (23).

4. The method according to any one of the preceding claims,
**characterized in that** the outside contour (K) of the pulse area (22) is varied depending on the current relative position and/or relative orientation of the workpiece (11) with respect to the laser head (13).

5. The method according to any one of the preceding claims,
**characterized in that** the workpiece (11) has at least two workpiece sections (41) that have different absorption characteristics for the used laser light and that the workpiece surface (23) is produced by a continuous process in the two workpiece sections (41).

6. The method according to claim 4,
**characterized in that** the two workpiece sections (41) consist of parts (42, 43) that are connected with one another by substance bond.

7. The method according to any one of the preceding claims,
**characterized in that** the distance between directly adjacent points of incidence (31) in the pulse area (22) remains constant during the production of the workpiece surface (23).

8. The method according to any one of the preceding claims,
**characterized in that** the groove (24) has a second groove end (37) opposite the first groove end (36) that is produced last of all.

9. The method according to claim 8,
**characterized in that** the groove depth decreases in the area of the second groove end (37).

10. The method according to claim 8 or 9,
**characterized in that** the outside contour (K) of the pulse area (22) during production of the second groove end (37) is different from the outside contour (K) of the pulse area (22) during production of the first groove end (36).

11. The method according to any one of the preceding claims,
**characterized in that** the energy input of the laser beam impulses (B) per unit area is larger or smaller in an peripheral zone (33) of the pulse area (22) that adjoins the workpiece surface (23) that is to be produced or that has been produced than in a core zone (34) of the pulse area (22) that is distanced from the workpiece surface (23) that is to be produced or that has been produced.

12. The method according to any one of the preceding claims,
**characterized in that** it is used to produce a tool (40) from the workpiece (11).

13. A method to produce a sharp edge on an edge of a workpiece surface (23) of a workpiece (11),
**characterized in that** first a surface is produced on the workpiece (11) that has an oversize at least around the edge, and then this oversize is removed according to the method according to one of the preceding claims.

## Revendications

1. Procédé de production d'une surface de pièce (23) constituée par une surface de rainure interne (25) d'une rainure (24), sur une pièce (11) en forme de barre, la rainure (24) étant réalisée en partant d'une première extrémité de rainure (36), en utilisant une machine d'usinage (10) qui présente un laser (12) générant des impulsions de faisceau laser (B), comprenant une tête laser (13) qui dirige les impulsions de faisceau laser (B) du laser (12) sur la pièce (11), et comprenant un dispositif d'entraînement de machine (16) qui présente au moins un moyen d'entraînement d'axe de machine (18), lequel est conçu pour déplacer la pièce (11) et la tête laser (13) l'une par rapport à l'autre suivant au moins un degré de liberté translatoire et/ou rotatoire (X, Y, Z, DX, DY, DZ), comprenant les étapes suivantes :
- positionnement et/ou alignement de la pièce (11) par rapport à la tête laser (13),
- prédéfinition et/ou sélection d'un contour extérieur (K) d'une surface d'impulsions (22), ainsi que de points d'incidence (31) qui sont disposés à l'intérieur de la surface d'impulsions (22) et sont espacés les uns des autres et sur lesquels les impulsions de faisceau laser (B) sont envoyées par la tête laser (13) dans une séquence prédéterminée, de telle sorte que le contour extérieur (K) de la surface d'impulsions (22) corresponde au contour de section transversale de la rainure (24) devant être réalisée,
- délivrance des impulsions de faisceau laser (B) par l'intermédiaire de la tête laser (13), dans une direction d'émission (R) visant la pièce (11), sur les points d'incidence (31) prédéterminés à l'intérieur de la surface d'impulsions (22), les impulsions de faisceau laser (B) étant orientées, pendant l'usinage, de façon tangentielle par rapport à la partie de la surface de pièce (23) produite par l'usinage de la pièce (11) qui est adjacente à la surface d'impulsions (22),
- déplacement de la tête laser (13) et/ou de la pièce (11) l'une par rapport à l'autre, de manière à ce que la surface d'impulsions (22), sur laquelle a lieu l'enlèvement de matière, se déplace par rapport à la pièce (11) exclusivement dans la direction d'émission (R), en suivant une trajectoire (38) prédéterminée, afin de produire la surface de pièce (23).

2. Procédé selon la revendication 1,
**caractérisé en ce que** toutes les zones de la pièce qui sont adjacentes à la surface de pièce (23) réalisée, sur laquelle tombent des impulsions de faisceau laser (B) lors de l'usinage, ont déjà été complètement éliminées par la réalisation et dans le cadre de la réalisation de la surface de pièce (23).

3. Procédé selon la revendication 1 ou 2,
**caractérisé en ce que** les impulsions de faisceau laser (B) qui sont dirigées sur les points d'incidence (31) de la surface d'impulsions (22) sont orientées de façon tangentielle au moins par rapport à la partie adjacente, déjà réalisée, de la surface de pièce (23) et réduisent la rugosité de cette partie adjacente de la surface de pièce (23).

4. Procédé selon l'une des revendications précédentes,
**caractérisé en ce que** le contour extérieur (K) de la surface d'impulsions (22) est modifié en fonction de la position relative et/ou de l'alignement relatif actuels de la pièce (11) par rapport à la tête laser (13).

5. Procédé selon l'une des revendications précédentes,
**caractérisé en ce que** la pièce (11) comporte au moins deux parties de pièce (41) qui présentent des caractéristiques d'absorption différentes pour la lumière laser utilisée, et que la surface de pièce (23) est réalisée par un déroulement continu du procédé, dans les deux parties de pièce (41).

6. Procédé selon la revendication 4,
**caractérisé en ce que** les deux parties de pièce (41) sont constituées de parties (42, 43) liées l'une à l'autre par matière.

7. Procédé selon l'une des revendications précédentes,
**caractérisé en ce que** la distance entre des points d'incidence (31) directement adjacents dans la surface d'impulsions (22) reste constante pendant la réalisation de la surface de pièce (23).

8. Procédé selon l'une des revendications précédentes,
**caractérisé en ce que** la rainure (24) présente une deuxième extrémité de rainure (37) qui est opposée à la première extrémité de rainure (36) et est réalisée en dernier.

9. Procédé selon la revendication 8,
**caractérisé en ce que** la profondeur de rainure diminue dans la région de la deuxième extrémité de rainure (37).

10. Procédé selon la revendication 8 ou 9,
**caractérisé en ce que** lors de la réalisation de la deuxième extrémité de rainure (37), le contour extérieur (K) de la surface d'impulsions (22) est différent du contour extérieur (K) de la surface d'impulsions lors de la réalisation de la première extrémité de rainure (36).

11. Procédé selon l'une des revendications précédentes,
**caractérisé en ce que** l'apport d'énergie des impulsions de faisceau laser (B) par unité de surface dans une zone marginale (33) de la surface d'impulsions (22) adjacente à la surface de pièce (23) à réaliser ou réalisée est supérieur ou inférieur à celui dans une zone centrale (34) de la surface d'impulsions (22) située à distance de la surface de pièce (23) à réaliser ou réalisée.

12. Procédé selon l'une des revendications précédentes,
**caractérisé en ce qu'**il est utilisé lors de la fabrication d'un outil (40) à partir de la pièce (11).

13. Procédé de fabrication d'une arête vive sur un bord d'une surface (23) d'une pièce (11), **caractérisé en ce que** l'on réalise d'abord une surface sur la pièce (11) qui présente une surdimension au moins autour de l'arête et qu'ensuite on élimine cette surdimension selon le procédé conforme à l'une des revendications précédentes.
